(19) Europäisches Patentamt

European Patent Office

Office européen des brevets

(11) **EP 4 763 883 A2**

(12) **EUROPEAN PATENT APPLICATION**

(43) Date of publication:
**24.06.2026  Bulletin 2026/26**

(21) Application number: **26154925.7**

(22) Date of filing: **30.08.2024**

(51) International Patent Classification (IPC):
*C08G 18/66* *(2006.01)*

(52) Cooperative Patent Classification (CPC):
**C08G 18/10; C08G 18/3206; C08G 18/6674;
C08G 18/7664; H01M 10/653; H01M 50/204;
H01M 50/242;** C08G 2110/0008; C08G 2110/0083;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.09.2023  EP 23196566**

(62) Document number(s) of the earlier application(s) in
accordance with Art. 76 EPC:
**24765122.7 / 4 590 732**

(71) Applicant: **Huntsman International LLC
The Woodlands, TX 77380 (US)**

(72) Inventors:
• **VERBEKE, Hans
3300 Tienen (BE)**

• **VAN DYCK, Johan
3300 Tienen (BE)**

(74) Representative: **Lee, Alexander Mark
Huntsman (Europe) BV
Grijpenlaan 18
3300 Tienen (BE)**

Remarks:
• This application was filed on 29-01-2026 as a
divisional application to the application mentioned
under INID code 62.
• Claims filed after the date of receipt of the divisional
application (Rule 68(4) EPC).

(54) **POLYURETHANE-BASED ELASTOMER FOAM SUITABLE FOR BATTERY POTTING**

(57) The present disclosure provides a reaction system for producing a polyurethane-based elastomer foam, the reaction system comprising: component A) an isocyanate component comprising a hard block prepolymer; and component B) an isocyanate-reactive component comprising: a polyol; a first chain extender and a second chain extender which is different from the first chain extender, wherein the first and second chain extenders are each an aliphatic diol having from 2 to 6 carbon atoms; a blowing agent; optionally a surfactant; and optionally a catalyst.

**EP 4 763 883 A2**

**Description**

FIELD OF THE INVENTION

The present disclosure relates to a reaction system for producing polyurethane-based elastomer foam. The present disclosure also relates to a method of producing the polyurethane-based elastomer foam, the polyurethane-based elastomer foam, a method of potting a battery pack, a potted battery pack, and use of the reaction system or polyurethane-based elastomer foam in battery potting. The polyurethane-based elastomer foam is particularly suited for use as a potting material in battery packs designed for automobiles such as electric vehicles.

BACKGROUND

Polyurethane-based elastomer foams have many uses. One such use is as a battery potting material (or a battery encapsulation material). Battery potting is the process of partially or completely filling a battery pack or mould containing battery cells with a material in order to at least partially encapsulate or surround the battery cells with the material. The purpose of battery potting is generally to protect the battery cells by e.g., providing resistance to mechanical shock and vibration; creating a seal against moisture, solvents and corrosives agents; and aiding electrical insulation and heat dissipation.

Battery potting is particularly important for battery packs used in electric vehicles (EV), which contain many battery cells that need protection from harsh conditions such as large temperature gradients, mechanical shock, vibration, and moisture. A battery potting material must therefore have good mechanical properties, particularly tensile properties (such as tensile strength, modulus (also known as Young's modulus), and elongation at break), over a large temperature range in order to function effectively in an EV, while being lightweight and easily processable.

However, the current state of the art battery potting materials may be too brittle when offering stable properties over the required temperature range, or may not provide the desired level of elongation over the required temperature range. The inability of the current state of the art battery potting materials to display the desired tensile properties over the required temperature ranges limits their effectiveness as battery potting materials, especially in EVs.

For example, a polysiloxane (silicone) material may be used as a battery potting material. However, the modulus of the silicone polymer is often below the modulus required to be effective when used in an EV. Moreover, silicones are expensive and the processability is generally more difficult than alternatives such as polyurethane-based elastomers.

As the demand for EVs grows, the demand for new and effective battery potting materials also grows. Thus, there is growing demand for a polyurethane-based elastomer foam which is improved in terms of tensile properties (such as tensile strength, modulus and elongation at break) and which provides an ideal balance of tensile and chemical properties for use as a battery potting material in EVs.

Thus, there is a need for a polyurethane-based elastomer foam which may be used as a battery potting material and which has an ideal balance of tensile properties (such as tensile strength, modulus and elongation at break) and chemical properties for a battery potting material, particularly for a battery potting material in EVs.

The present disclosure addresses the problems and needs mentioned above.

SUMMARY

In a first aspect, there is provided a reaction system for producing a polyurethane-based elastomer foam, the reaction system comprising: component A) an isocyanate component comprising a hard block prepolymer; and component B) an isocyanate-reactive component comprising: a polyol; a first chain extender and a second chain extender which is different from the first chain extender, wherein the first and second chain extenders are each an aliphatic diol having from 2 to 6 carbon atoms; a blowing agent; optionally a surfactant; and optionally a catalyst.

The present inventors have surprisingly found that the above-described reaction system may be used to produce a polyurethane-based elastomer foam which has an ideal balance of properties for use as a battery potting material. Specifically, the polyurethane-based elastomer foam obtained from the reaction system has a high tensile strength and a high elongation at break while also having a high (Young's) modulus, and interestingly it maintains these beneficial tensile properties over a wide temperature range. It is particularly surprising that the foam has both a relatively high elongation at break and a relatively high modulus, over a wide temperature range. A polyurethane-based elastomer foam having this combination of tensile properties is an excellent choice for battery potting material, especially for a battery potting material in an EV. This is because the foam has high strength, high strain capability and adequate rigidity, and therefore protects the battery cells it encapsulates from the harsh conditions experienced in e.g., an EV, where it experiences significant vibration, mechanical shock and temperature extremes. It is difficult to design a reaction system for a polyurethane-based elastomer foam which yields a foam having a high tensile strength, a high elongation at break and a high modulus. Until now, at least one of the tensile properties has not been sufficient for use as a battery potting material over the wide range of

**EP 4 763 883 A2**

operating temperatures required for effective use as a battery potting material, especially in EVs. It is particularly difficult to design a reaction system for a polyurethane-based elastomer foam which yields a relatively high elongation at break in combination with a relatively high modulus.

Moreover, the polyurethane-based elastomer foam obtained from the reaction system is lightweight, and the reaction system is easily processable, making the foam ideal as a battery potting material.

In one embodiment, the hard block prepolymer may be formed from the reaction between an isocyanate composition and one or more isocyanate-reactive compounds each having a molar mass below 500 g/mol.

In one embodiment, the hard block prepolymer may be an MDI-based prepolymer.

In one embodiment, the NCO% of the hard block prepolymer may range from about 15% to about 30%.

In one embodiment, the average functionality of the hard block prepolymer may range from about 1.7 to about 2.3.

In one embodiment, the isocyanate component may further comprise a polyisocyanate compound which is different from the hard block prepolymer. The polyisocyanate compound may be polymeric MDI.

In one embodiment, the NCO% of the polyisocyanate compound may range from about 25% to about 40%.

In one embodiment, the average functionality of the polyisocyanate compound may range from about 2.4 to about 3.0.

In one embodiment, the weight ratio of the hard block prepolymer to the polyisocyanate compound in the isocyanate component may range from 70:30 to 90:10.

In one embodiment, the average functionality of the isocyanate component may range from about 1.8 to about 2.4.

In one embodiment, the polyol may be a polyether polyol.

In one embodiment, the polyol may have a hydroxyl number ranging from about 10 mg KOH/g to about 180 mg KOH/g.

In one embodiment, the polyol may have a weight-average molecular weight ranging from about 1000 g/mol to about 7500 g/mol.

In one embodiment, the polyol may have an average functionality ranging from about 2.0 to about 3.0.

In one embodiment, the first and second chain extenders may be each linear aliphatic diols, and preferably any one independently selected from monoethylene glycol (MEG), diethylene glycol (DEG), 1,3-propanediol, 1,2-propanediol, 2-methyl-1,3-propanediol, 3-chloro-1,2-propanediol, 1,4-butanediol, 1,3-butanediol, 2,3-butanediol, 2-ethyl-1,4-butanediol, 1,5-pentanediol, 1,3-pentanediol, 3-methyl-1,5-pentanediol, 2-methyl-2,4-pentanediol, 1,6-hexanediol, 1,2-hexanediol and dipropylene glycol.

In one embodiment, the first and second chain extenders may each have a molar mass ranging from about 60 to about 110 g/mol, wherein the molar mass of the first chain extender is less than the molar mass of the second chain extender.

In one embodiment, the first chain extender may be monoethylene glycol (MEG). In one embodiment, the second chain extender may be diethylene glycol (DEG).

In one embodiment, the sum of the OH equivalents for the first chain extender and the second chain extender may contribute more than 85% of the total stoichiometric OH equivalents (excluding water) in component B.

In one embodiment, the polyol may be present in component B in an amount ranging from about 65 weight% to about 90 weight%, based upon the total weight of component B.

In one embodiment, the first chain extender may be present in component B in an amount ranging from about 5 weight% to about 15 weight%, based upon the total weight of component B.

In one embodiment, the second chain extender may be present in component B in an amount ranging from about 4 weight% to about 10 weight%, based upon the total weight of component B.

In one embodiment, component A and component B may be present in the reaction system in an amount such that the isocyanate index is between about 75 and about 150 when component A is mixed with component B.

In one embodiment, the polyurethane-based elastomer foam may have a tensile strength at 23°C of at least about 3.0 MPa. In one embodiment, the polyurethane-based elastomer foam may have a % elongation at break at 23°C of at least about 50%. In one embodiment, the polyurethane-based elastomer foam may have a modulus (measured at a strain rate of 12mm/min, and determined within a 0.1-2% strain interval) at 23°C of at least about 30 MPa.

In one embodiment, the polyurethane-based elastomer foam may have a

storage modulus (MPa) at -35°C / storage modulus (MPa) at 100°C

ranging from about 10 to about 150.

In one embodiment, the polyurethane-based elastomer foam may have a tan delta below about 0.5 in the temperature range of -60°C to 200°C.

In a second aspect, there is provided a method of producing a polyurethane-based elastomer foam, the method comprising: mixing component A with component B as defined in the reaction system described herein to form a reactive mixture; and allowing the reactive mixture to cure to form a polyurethane-based elastomer foam.

In a third aspect, there is provided a polyurethane-based elastomer foam obtainable by the method of producing a polyurethane-based elastomer foam as described herein.

In a fourth aspect, there is provided a method of potting a battery pack comprising a plurality of battery cells, the method comprising: mixing component A with component B as defined in the reaction system described herein to form a reactive mixture; placing the reactive mixture around the plurality of battery cells; and allowing the reactive mixture to cure to at least partially encapsulate the plurality of battery cells with a polyurethane-based elastomer foam.

In a fifth aspect, there is provided a potted battery pack obtainable by the method of potting a battery pack as described herein.

In a sixth aspect, there is provided a use of the reaction system as defined herein or the polyurethane-based elastomer foam as defined herein to at least partially encapsulate a plurality of battery cells within a battery pack with the polyurethane-based elastomer foam.

The foregoing embodiments should not be read to limit or otherwise narrow the scope of any inventive concepts otherwise provided by the present disclosure. While multiple embodiments are disclosed, other embodiments will become apparent to those skilled in the art from the following description and figure. Accordingly, the description and figure are to be regarded as illustrative rather than restrictive.

BRIEF DESCRIPTION OF THE FIGURES

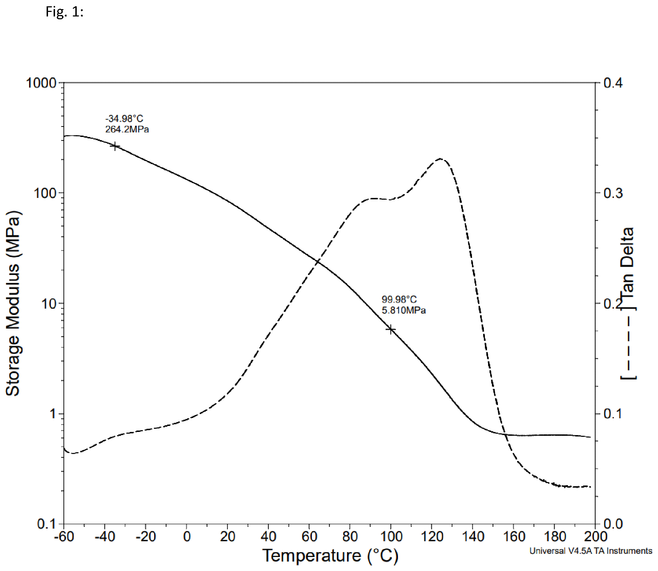

**Figure 1** is a DMA graph showing temperature (x-axis) vs storage modulus (curve starting upper left of graph) and tan delta (curve starting bottom right of graph) of the polyurethane-based elastomer foam produced in Example 1.

DETAILED DESCRIPTION

The present disclosure relates to a reaction system for producing a polyurethane-based elastomer foam, the reaction system comprising: component A) an isocyanate component comprising a hard block prepolymer; and component B) an isocyanate-reactive component comprising: a polyol; a first chain extender and a second chain extender which is different from the first chain extender, wherein the first and second chain extenders are each an aliphatic diol having from 2 to 6 carbon atoms; a blowing agent; optionally a surfactant; and optionally a catalyst. The reaction system therefore comprises two components (component A and component B) which are separate and only mixed when forming a reactive mixture.

The reaction system is for producing a polyurethane-based elastomer foam, which is particularly useful as a battery potting material for EVs. This is because the mechanical (including tensile) and chemical properties of the polyurethane-based elastomer foam obtained by the reaction system are ideal for use as a battery potting material. Specifically, the polyurethane-based elastomer foam has an excellent balance of tensile properties (such as tensile strength, modulus and elongation at break) and can therefore effectively protect potted battery cells even under the harsh conditions an EV is exposed to, such as large temperature gradients, mechanical shock, vibration and moisture.

**[Component A]**

Component A is an isocyanate component comprising a hard block prepolymer. In the context of the present disclosure, a "hard block prepolymer" refers to a prepolymer which is formed from the reaction between an isocyanate composition and one or more isocyanate-reactive compounds each having a molar mass below 500 g/mol. An isocyanate-reactive compound(s) having a molar mass above 500 g/mol may additionally be used in the formation of the prepolymer, as long as the weight ratio of the one or more isocyanate-reactive compounds each having a molar mass below 500 g/mol to the isocyanate-reactive compound(s) having a molar mass above 500 g/mol is 90:10 or below, such as 95:5 or 99:1. Preferably, an additional isocyanate-reactive compound(s) having a molar mass of above 500 g/mol is not used when forming the hard block prepolymer. The hard block prepolymer is isocyanate-terminated. The "hard block" refers to the properties the prepolymer imparts on the obtained polyurethane-based elastomer foam, as the prepolymer contributes rigid segments to the foam.

The one or more isocyanate-reactive compounds each having a molar mass below 500 g/mol used to make the hard block prepolymer may be one compound or a mixture of different compounds. Each isocyanate-reactive compound has at least two active hydrogens in its molecule and is capable of reacting with an isocyanate compound. The one or more isocyanate-reactive compounds may each have a molar mass below 400 g/mol, or below 300 g/mol, or below 200 g/mol. The low molar mass of the one or more isocyanate-reactive compounds means a hard block prepolymer is obtained.

The isocyanate-reactive compound having a molar mass below 500 g/mol may be any isocyanate-reactive compound known in the art that is suitable for use in the present disclosure. The isocyanate-reactive compound may be a chain extender or a mixture of chain extenders. Preferably, the one or more isocyanate-reactive compounds comprises at least 2, preferably 3, chain extenders. The isocyanate-reactive compound may be any one or more selected from polyhydric alcohols such as ethylene glycol, diethylene glycol, propylene glycol, 1,4-butanediol, 1,5-pentanediol, methylpentanediol, 1,6-hexanediol, dipropylene glycol and tripropylene glycol.

The isocyanate composition used to make the hard block prepolymer may comprise one polyisocyanate compound or a mixture of different polyisocyanate compounds. The isocyanate composition may comprise any polyisocyanate compound known in the art that is suitable for use in the present disclosure. The polyisocyanate compound typically has the structure R-(NCO)$_x$, wherein x is at least 2 and R is an aromatic group, alicyclic group, an aliphatic group, or a combination thereof. The polyisocyanate compound may comprise any one or more selected from hexamethylene diisocyanate, isophorone diisocyanate, methylene dicyclohexyl diisocyanate, cyclohexane diisocyanate, toluene diisocyanate (TDI), naphthalene diisocyanate, tetramethylxylene diisocyanate, phenylene diisocyanate, toluidine diisocyanate and diphenylmethane diisocyanate (also known as methylene diphenyl diisocyanate, MDI). Any isomer of the polyisocyanate compound may be used. For example, when referring to MDI, at least the isomers 2,4'-MDI, 4,4'-MDI or a combination thereof are referred to. Preferably the isocyanate composition comprises MDI and/or a derivative thereof, and more preferably the isocyanate composition comprises 4,4'-MDI and 2,4'-MDI. The hard block prepolymer is preferably an MDI-based prepolymer.

Other components may be present in the hard block prepolymer, such as stabilizers. For example, a modified MDI (such as uretonimine modified MDI) may be added to the prepolymer in order to improve the liquid stability of the prepolymer.

Commercially available hard block prepolymer compounds suitable for use in the present disclosure are sold under the SUPRASEC® and RUBINATE® tradenames by Huntsman Corporation. A particularly preferred hard block prepolymer for use in the present disclosure is SUPRASEC®2021.

Methods to prepare the hard block prepolymer are known in the art. The relative amounts of isocyanate composition and isocyanate-reactive compound(s) depend on their equivalent weights and on the desired NCO%, and can be determined easily by those skilled in the art.

The NCO% of the hard block prepolymer may range from about 15% to about 30%, or from about 17% to about 28%, or from about 19% to about 27%, or from about 20% to about 26%, or from about 21% to about 25%. As used herein, the NCO% refers to the isocyanate content and may be calculated from ISO 14896:2009.

The average functionality of the hard block prepolymer may range from about 1.7 to about 2.3, or from about 1.8 to about 2.2, or from about 1.9 to about 2.1. As used herein, the "average functionality" refers to the number average functionality, as commonly used in the art. The average functionality of an isocyanate compound or composition refers to the average number of NCO groups in each molecule. Similarly, the average functionality of a polyol compound or composition refers to the average number of OH groups in each molecule.

In a preferred embodiment, the hard block prepolymer is formed from the reaction between: an isocyanate composition comprising MDI, preferably a mixture of 4,4'-MDI and 2,4'-MDI; and at least two chain extenders each having a molar mass below 500 g/mol, optionally wherein the NCO% of the hard block prepolymer may range from about 20% to about 26% and the average functionality of the hard block prepolymer may range from about 1.8 to about 2.2.

The isocyanate component may contain only the hard block prepolymer, or may contain additional isocyanate compounds. In one embodiment, the isocyanate component further comprises a polyisocyanate compound which is different from the hard block prepolymer.

The polyisocyanate compound may be a polymeric isocyanate compound, and is preferably polymeric MDI. Commercially available polymeric MDI compounds suitable for use in the present disclosure are sold under the SUPRASEC® and RUBINATE® tradenames by Huntsman Corporation. A particularly preferred polymeric MDI for use in the present disclosure is SUPRASEC® 5025.

The NCO% of the polyisocyanate compound may range from about 25% to about 40%, or from about 26% to about 38%, or from about 26% to about 37%, or from about 26% to about 36%, or from about 27% to about 35%, or from about 28% to about 34%, or from about 29% to about 33%.

The average functionality of the polyisocyanate compound may range from about 2.4 to about 3.0, or from about 2.5 to about 2.9, or from about 2.6 to about 2.8.

In a preferred embodiment, the polyisocyanate compound is polymeric MDI, wherein the NCO% of the polymeric MDI ranges from about 28% to about 34%, and the average functionality of the polymeric MDI ranges from about 2.5 to about 2.9.

The weight ratio of the hard block prepolymer to the polyisocyanate compound, when present, in the isocyanate component may range from 65:35 to 95:5, 70:30 to 90:10, or from 75:25 to 85:15. Such a weight ratio imparts excellent mechanical properties on the elastomer foam.

The viscosity at 25°C of the isocyanate component may range from about 400 to about 1600 mPa.s, or from about 500 mPa.s to about 1500 mPa.s, or from about 600 mPa.s to about 1400 mPa.s. The viscosity may be measured using a Brookfield DV-II viscometer at 25°C.

The average functionality of the isocyanate component may range from about 1.8 to about 2.4, or from about 1.9 to about 2.3, or from about 1.9 to about 2.2.

Component A and component B may be present in the reaction system in an amount such that the isocyanate index is between about 75 and about 150, or between about 80 to about 140, or between about 85 to about 140, or between about 90 to about 130, or between about 95 to about 125, or between about 95 to about 120, or between about 95 to about 115, when component A is mixed with component B.

As used herein, the isocyanate index refers to the ratio of isocyanate groups (NCO-groups) over isocyanate-reactive hydrogen atoms present in a composition or formulation:

$$\underline{[NCO] \times 100}$$

[active hydrogen]

In other words, the isocyanate index expresses the percentage of isocyanate used in a composition with respect to the amount of isocyanate theoretically required for reacting with the amount of isocyanate-reactive hydrogen used in the composition. It should be observed that the isocyanate index as used herein is considered from the point of view of the actual polymerisation process preparing the material involving the isocyanate ingredient and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens (including those of water, if used) present at the actual polymerisation stage are taken into account.

**[Component B]**

Component B is an isocyanate-reactive component comprising: a polyol; a first chain extender and a second chain extender which is different from the first chain extender, wherein the first and second chain extenders are each an aliphatic diol having from 2 to 6 carbon atoms; a blowing agent; optionally a surfactant; and optionally a catalyst.

[Polyol]

The isocyanate-reactive component comprises a polyol. The polyol may be present in component B in an amount ranging from about 50 weight% to about 90 weight%, based upon the total weight of component B. Preferably, the polyol may be present in component B in an amount ranging from about 55 weight% to about 90 weight%, or from about 60 weight% to about 90 weight%, or from about 65 weight% to about 85 weight%, or from about 70 weight% to about 85 weight%, or from about 72 weight% to about 85 weight%, based upon the total weight of component B.

The polyol may be selected from a polyether polyol having at least two hydroxyl groups (herein referred to as a "polyether polyol"), a polyester polyol or a polyether-polyester polyol. Preferably, the polyol is a polyether polyol.

The polyether polyol may be made by the addition of alkylene oxides to initiators, which may contain from 2 to 8 active hydrogen atoms per molecule. In some embodiments, the initiators may include glycols, glycerol, trimethylolpropane, triethanolamine, pentaerythritol, sorbitol, sucrose, ethylenediamine, ethanolamine, diethanolamine, aniline, toluenediamines (e.g., 2,4 and 2,6 toluenediamines), polymethylene polyphenylene polyamines, N-alkylphenylene-diamines, o-chloro-aniline, p-aminoaniline, diaminonaphthalene, or a combination thereof. Suitable alkylene oxides that may be used to form the polyether polyols include ethylene oxide (EO), propylene oxide (PO), butylene oxide, or a combination thereof. In a preferred embodiment, polyol is prepared by using glycerol as the initiator, and EO and PO as the alkylene oxides.

When the alkylene oxide used to form the polyether polyol is EO and/or PO, the polyether polyol may comprise PO, EO, or a combination of PO and EO groups or moieties in the polymeric structure. These PO and EO units may be arranged randomly or in block sections throughout the polymeric structure. In some embodiments, the EO content of the polyol may range from 0 to 100% by weight based on the total weight of the polyol (e.g., 5% to 20% by weight). In some embodiments, the PO content of the polyol may range from 100 to 0% by weight based on the total weight of the polyol (e.g., 95% to 80% by weight). Accordingly, in some embodiments, the EO content of a polyol can range from 5% to 20% by weight of the polyol while the PO content can range from 80% to 95% by weight of the polyol. Moreover, in some embodiments, the EO and/or PO units can either be located terminally on the polymeric structure of the polyol or within the interior sections of the polymeric backbone structure of the polyol. Suitable polyether polyols include poly(oxyethylene oxypropylene) diols and triols obtained by the sequential addition of PO and EO to di- or tri- functional initiators that are known in the art.

Commercially available polyether polyols suitable for use in the present disclosure are sold under the DALTOCEL® tradename by Huntsman Corporation. A particularly preferred polyether polyol for use in the present disclosure is DALTOCEL®F499.

Other suitable polyols that may be used in the present disclosure include Mannich polyols having a nominal hydroxyl functionality of at least 2, and having at least one secondary or tertiary amine nitrogen atom per molecule. In some embodiments, Mannich polyols are the condensates of an aromatic compound, an aldehyde, and an alkanol amine. For example, a Mannich condensate may be produced by the condensation of either or both of phenol and an alkylphenol with formaldehyde and one or more of monoethanolamine, diethanolamine, and diisopronolamine. In some embodiments, the Mannich condensates comprise the reaction products of phenol or nonylphenol with formaldehyde and diethanolamine. The Mannich condensates of the present disclosure may be made by any known process. In some embodiments, the Mannich condensates serve as initiators for alkoxylation. Any alkylene oxide (e.g., those alkylene oxides mentioned above) may be used for alkoxylating one or more Mannich condensates. When polymerization is completed, the Mannich polyol comprises primary hydroxyl groups and/or secondary hydroxyl groups bound to aliphatic carbon atoms.

The polyol may have a weight-average molecular weight ranging from about 1000 g/mol to about 7500 g/mol, or from about 2000 g/mol to about 7000 g/mol, or from about 3000 g/mol to about 6500 g/mol, or from about 3500 g/mol to about 6000 g/mol, or from about 4000 g/mol to about 6000 g/mol, or from about 4500 g/mol to about 5500 g/mol, or from about 4700 g/mol to about 5300 g/mol. The "weight-average molecular weight" as used herein is measured by gel permeation chromatography (GPC).

The polyol may have a hydroxyl number ranging from about 10 mg KOH/g to about 180 mg KOH/g, or from about 10 mg KOH/g to 150 mg KOH/g, or from about 10 mg KOH/g to 125 mg KOH/g, or from about 10 mg KOH/g to 100 mg KOH/g, or from about 15 mg KOH/g to 90 mg KOH/g, or from about 20 mg KOH/g to 80 mg KOH/g, or from about 20 mg KOH/g to 70 mg KOH/g, or from about 20 mg KOH/g to 60 mg KOH/g, or from about 20 mg KOH/g to 50 mg KOH/g. The hydroxyl number of a polyol can be measured using ASTM-D4274-21.

The polyol may have an average functionality ranging from about 2.0 to about 3.0, or from about 2.1 to about 2.9, or from about 2.2 to about 2.8, or from about 2.3 to about 2.7, or from about 2.4 to about 2.6.

The purpose of the polyol is to impart flexibility to the polyurethane-based elastomer foam, which is needed to prevent cracking and/or fracturing. Flexibility is also needed to impart toughness to the foam.

In a preferred embodiment, the polyol is a polyether polyol having a weight-average molecular weight ranging from about 4000 g/mol to about 6000 g/mol, a hydroxyl number ranging from about 20 mg KOH/g to about 50 mg KOH/g, an average functionality ranging from about 2.0 to about 3.0.

Further polyols may be present in component B. Component B may contain only one type of polyol such as a polyether polyol as described above.

[Chain extenders]

Component B comprises a first chain extender and a second chain extender which is different from the first chain extender. The chain extenders react with the isocyanate component to form a rigid hard segment in the polyurethane-based elastomer foam. A purpose of the chain extenders is to impart hardness and tensile strength to the foam.

The first and second chain extenders are each an aliphatic diol having from 2 to 6 carbon atoms. Preferably, the first and second chain extenders are each an aliphatic diol having from 2 to 5 carbon atoms, more preferably from 2 to 4 carbon atoms.

In one embodiment, the first and second chain extenders each has a molar mass ranging from about 60 to about 200 g/mol, or from about 60 to about 150 g/mol, or from about 60 to about 140 g/mol, or from about 60 to about 130 g/mol, or from about 60 to about 120 g/mol, or from about 60 to about 110 g/mol. The molar mass of the first chain extender is preferably less than the molar mass of the second chain extender.

In one embodiment, the first and second chain extenders are each linear aliphatic diols, and preferably any one independently selected from monoethylene glycol (MEG), diethylene glycol (DEG), 1,3-propanediol, 1,2-propanediol, 2-methyl-1,3-propanediol, 3-chloro-1,2-propanediol, 1,4-butanediol, 1,3-butanediol, 2,3-butanediol, 2-ethyl-1,4-butanediol, 1,5-pentanediol, 1,3-pentanediol, 3-methyl-1,5-pentanediol, 2-methyl-2,4-pentanediol, 1,6-hexanediol, 1,2-hexanediol and dipropylene glycol.

In a preferred embodiment, the first chain extender is monoethylene glycol (MEG) and/or the second chain extender is diethylene glycol (DEG). In a particularly preferred embodiment, the first chain extender is monoethylene glycol (MEG) and the second chain extender is diethylene glycol (DEG).

In one embodiment, the sum of the OH equivalents for the first chain extender and the second chain extender contributes more than 85%, or more than 87%, or more than 89%, of the total stoichiometric OH equivalents (excluding water) in component B.

In one embodiment, the first chain extender is present in component B in an amount ranging from about 3 weight% to about 17 weight%, or from 4 weight% to 16 weight%, or from 5 weight% to 15 weight%, or from 6 weight% to 14 weight%, or from 7 weight% to 13 weight%, or from 8 weight% to 12 weight%, or from 9 weight% to 11 weight%, based upon the total weight of component B.

In one embodiment, the second chain extender is present in component B in an amount ranging from about 2 weight% to about 12 weight%, or from 3 weight% to 11 weight%, or from 4 weight% to 10 weight%, or from 5 weight% to 9 weight%, or from 6 weight% to 8 weight%, based upon the total weight of component B.

In one embodiment, the weight ratio of the first chain extender to the second chain extender in component B is 10:2 to 10:9, or 10:5 to 10:9, or 10:6 to 10:8.

In a preferred embodiment, the first chain extender is MEG and the second chain extender is DEG, wherein the first chain extender is present in component B in an amount ranging from about 5 weight% to about 15 weight% and the second chain extender is present in component B in an amount ranging from about 4 weight% to about 10 weight%, based upon the total weight of component B.

[Blowing agent]

Component B comprises a blowing agent. One or more blowing agents may be present.

Physical and chemical blowing agents are suitable for use in the present disclosure.

Any physical blowing agent blowing agent known in the art can be used as the blowing agent. For example, suitable blowing agent compounds include hydrocarbons, hydrochlorofluorocarbons, hydrofluorocarbons, hydrohaloolefins, or combinations thereof.

Examples of hydrocarbon blowing agents that may be used include lower aliphatic or cyclic, linear, or branched hydrocarbons (e.g., alkanes, alkenes and cycloalkanes, preferably those compounds having from 4 to 8 carbon atoms). Specific examples of suitable blowing agent compounds include n-butane, iso-butane, 2,3-dimethylbutane, cyclobutane, n-pentane, isopentane, technical grade pentane mixtures, cyclopentane, methylcyclopentane, neopentane, n-hexane, iso-hexane, n-heptane, iso-heptane, cyclohexane, methylcyclohexane, 1-pentene, 2-methylbutene, 3-methylbutene, 1-hexene, or combinations thereof.

Examples of suitable hydrochlorofluorocarbons include 1-chloro-1,2-difluoroethane, 1-chloro-2,2-difluoroethane, 1-chloro-1,1-difluoroethane, 1,1-dichloro-1-fluoroethane, monochlorodifluoromethane, or combinations thereof.

Examples of suitable hydrofluorocarbons include 1 ,1,1,2-tetrafluoroethane (HFC 134a), 1,1,2,2-tetrafluoroethane, trifluoromethane, heptafluoropropane, 1,1,1- trifluoroethane, 1,1,2- trifluoroethane, 1,1,1,2,2-pentafluoropropane, 1,1,1,3- tetrafluoropropane, 1,1,1,3, 3-pentafluoropropane (HFC 245fa), 1,1,3, 3,3-pentafluoropropane, 1,1,1,3,3-pentafluoro-n-butane (HFC 365mfc), 1,1,1,4,4,4-hexafluoro-n-butane, 1,1,1,2,3,3,3-heptafluoropropane (HFC 227ea), or combinations thereof.

Examples of suitable hydrohaloolefins are trans-1-chloro-3,3,3-fluoropropene (HFO 1233zd), trans-1,3,3,3-tetrafluoropropene (HFO 1234ze), cis- and trans- 1,1,1,4,4,4-hexafluoro-2-butene (HFO 1336mzz), or combinations thereof.

Chemical blowing agents, such as water, mono-carboxylic acid (e.g., formic acid), and polycarboxylic acid, can also be used as the sole blowing agent. Alternatively, these chemical blowing agents can also be used in combination with the physical blowing agents described above as a co-blowing agent.

In a preferred embodiment, the blowing agent is water. Water reacts with isocyanates to form gaseous $CO_2$ in order to impart the foam structure on the polyurethane.

In one embodiment, the blowing agent is present in component B in an amount of less than about 1 weight%, or from about 0.1 weight% to about 0.9 weight%, or from about 0.1 weight% to about 0.8 weight%, or from about 0.1 weight% to about 0.7 weight%, or from about 0.1 weight% to about 0.6 weight%, or from about 0.1 weight% to about 0.5 weight%, based upon the total weight of component B.

[Additives in component B]

The use of a surfactant(s) in component B helps to control the cell structure of the final foam product. Therefore, component B may comprise a surfactant. Component B may contain two or more surfactants. Any surfactants known in the art may be used in component B. Suitable surfactants include silicone-based surfactants and non-silicone-based surfactants. In a preferred embodiment, the surfactant comprises one silicone-based surfactant or two silicone-based surfactants. Suitable silicone-based surfactants include polyether polydimethylsiloxane copolymers. Commercially available silicone-based surfactants suitable for use in the present disclosure include TEGOSTAB® B 1048 (available from Evonik) and VORASURF® DC198 (available from DOW Chemical Co.).

In one embodiment, the surfactant is present in component B in an amount of less than about 2 weight%, or from about 0.1 weight% to about 2 weight%, or from about 0.5 weight% to about 1.9 weight%, or from about 0.5 weight% to about 1.8 weight%, or from about 0.5 weight% to about 1.7 weight%, or from about 0.5 weight% to about 1.6 weight%, or from about 0.5 weight% to about 1.5 weight%, based upon the total weight of component B.

A catalyst may be included in component B in order to improve the cure of the reaction mixture formed when components A and B are mixed. Preferably a delay action catalyst is included. This enables the reaction mixture to fill a battery pack and effectively encapsulate the battery cells therein before curing. Suitable catalysts include blocked tertiary amine catalysts (such as DABCO®8154 available from Evonik), blocked formic acid catalysts (such as JEFFCAT®ZF-54 available from Huntsman Corporation) and a tertiary amine blow catalyst (such as POLYCAT®SA 5 available from Evonik). One or more catalysts may be used in component B.

In one embodiment, the catalyst is present in component B in an amount of less than about 1 weight%, or from about 0.1 weight% to about 0.9 weight%, or from about 0.1 weight% to about 0.8 weight%, or from about 0.1 weight% to about 0.7 weight%, or from about 0.1 weight% to about 0.6 weight%, or from about 0.1 weight% to about 0.5 weight%, based upon the total weight of component B

Further additives may be present in component B, such as antioxidants, a crosslinking agent or a pigment.

Below are some exemplary reaction systems of the present disclosure.

In one embodiment, the reaction system for producing a polyurethane-based elastomer foam comprises: component A) an isocyanate component comprising a hard block prepolymer, wherein the hard block prepolymer is formed from the reaction between: an isocyanate composition comprising MDI, and one or more isocyanate-reactive compounds each having a molar mass below 500 g/mol; and component B) an isocyanate-reactive component comprising: a polyether polyol; a first chain extender and a second chain extender which is different from the first chain extender, wherein the first and second chain extenders are each an aliphatic diol having from 2 to 6 carbon atoms; a blowing agent; optionally a surfactant; and optionally a catalyst.

In one embodiment, the reaction system for producing a polyurethane-based elastomer foam comprises: component A) an isocyanate component comprising a hard block prepolymer and polymeric MDI, wherein the hard block prepolymer is formed from the reaction between: an isocyanate composition comprising MDI, and one or more isocyanate-reactive compounds each having a molar mass below 500 g/mol; and component B) an isocyanate-reactive component comprising: a polyether polyol; a first chain extender and a second chain extender which is different from the first chain extender, wherein the first and second chain extenders are each an aliphatic diol having from 2 to 6 carbon atoms; a blowing agent; optionally a surfactant; and optionally a catalyst.

In one embodiment, the reaction system for producing a polyurethane-based elastomer foam comprises: component A) an isocyanate component comprising a hard block prepolymer, wherein the hard block prepolymer is formed from the reaction between: an isocyanate composition comprising MDI, and one or more isocyanate-reactive compounds each having a molar mass below 500 g/mol; and component B) an isocyanate-reactive component comprising: a polyether polyol; a first chain extender which is MEG and a second chain extender which is DEG; a blowing agent; optionally a surfactant; and optionally a catalyst.

In one embodiment, the reaction system for producing a polyurethane-based elastomer foam comprises: component A) an isocyanate component comprising a hard block prepolymer, wherein the hard block prepolymer is formed from the reaction between: an isocyanate composition comprising MDI, and at least two isocyanate-reactive compounds each having a molar mass below about 500 g/mol; and component B) an isocyanate-reactive component comprising: a polyether polyol having a weight-average molecular weight ranging from about 1000 g/mol to about 7500 g/mol; a first chain extender which is MEG a second chain extender which is DEG; a blowing agent; optionally a surfactant; and optionally a catalyst.

In one embodiment, the reaction system for producing a polyurethane-based elastomer foam comprises: component A) an isocyanate component comprising a hard block prepolymer and polymeric MDI, wherein the hard block prepolymer is formed from the reaction between: an isocyanate composition comprising MDI, and at least two isocyanate-reactive compounds each having a molar mass below about 500 g/mol; and component B) an isocyanate-reactive component comprising: a polyether polyol having a weight-average molecular weight ranging from about 1000 g/mol to about 7500 g/mol; a first chain extender which is MEG a second chain extender which is DEG; a blowing agent; optionally a surfactant; and optionally a catalyst.

In one embodiment, the reaction system for producing a polyurethane-based elastomer foam comprises: component A) an isocyanate component comprising a hard block prepolymer; and component B) an isocyanate-reactive component comprising: a polyol; a first chain extender and a second chain extender which is different from the first chain extender, wherein the first and second chain extenders are each an aliphatic diol having from 2 to 6 carbon atoms; a blowing agent; optionally a surfactant; and optionally a catalyst, wherein the polyol is present in component B in an amount ranging from about 65 weight% to about 90 weight%, the first chain extender is present in component B in an amount ranging from about 5 weight% to about 15 weight%, the second chain extender is present in component B in an amount ranging from about 4 weight% to about 10 weight%, based upon the total weight of component B, and optionally wherein components A and B are present in an amount such that, when the components are mixed, the isocyanate index is between about 90 to 120.

In one embodiment, the reaction system for producing a polyurethane-based elastomer foam having a tensile strength at 23°C of at least about 3.0 MPa, % elongation at break at 23°C of at least about 50% and a modulus (12 mm/min, 0.1-2% strain) at 23° of at least about 30 MPa, comprises: component A) an isocyanate component comprising a hard block prepolymer; and component B) an isocyanate-reactive component comprising: a polyol; a first chain extender and a second chain extender which is different from the first chain extender, wherein the first and second chain extenders are each an aliphatic diol having from 2 to 6 carbon atoms; a blowing agent; optionally a surfactant; and optionally a catalyst.

**[A method of producing a polyurethane-based elastomer foam]**

The present disclosure provides a method of producing a polyurethane-based elastomer foam, the method comprising: mixing component A with component B as defined in the reaction system to form a reactive mixture; and allowing the reactive mixture to cure to form a polyurethane-based elastomer foam.

The methods of mixing component A and component B are known in the art, and include mechanical mixing.

The method may further comprise placing the reactive mixture into a mould before allowing the mixture to cure. The polyurethane-based elastomer foam formed by the curing of the reactive mixture may then be demoulded, if a mould is used.

To aid curing, the reactive mixture may be heated to a temperature above room temperature, such as between about 30°C and about 100°C, or between about 30°C and about 50°C, or between about 35°C and about 45°C. Alternatively, if the reaction mixture is placed in a mould to cure, the mould may be preheated to between about 30°C and about 100°C, or between about 30°C and about 50°C, or between about 35°C and about 45°C. However, there is no need to heat the reactive mixture in order to cure the mixture.

**[Polyurethane-based elastomer foam]**

The above-described reaction system may be used in the above-described method to obtain a polyurethane-based elastomer foam.

The tensile properties of the polyurethane-based elastomer foam produced in accordance with the present disclosure are responsible for the excellent suitability of the foam as a battery potting material, especially in EVs.

In one embodiment, the polyurethane-based elastomer foam has a tensile strength at 23°C of at least about 2.0 MPa, or at least about 2.5 MPa, or at least about 3.0 MPa, or about at least about 3.1 MPa, or about at least about 3.2 MPa, or ranging from about 3.0 MPa to about 10 MPa, or ranging from about 3.0 MPa to about 5.0 MPa, or ranging from about 3.1 MPa to about 5.0 MPa, or ranging from about 3.2 MPa to about 5.0 MPa. Tensile strength is the maximum tensile stress sustained by a test specimen during a tensile test. Tensile strength essentially measures the resistance of the foam to elongational forces. Therefore, typically a higher tensile strength is beneficial for a battery potting material in EVs.

In one embodiment, the polyurethane-based elastomer foam has a % elongation at break at 23°C of at least about 40%, or at least about 45%, or at least about 50%, or at least about 55%, or at least about 60%, or at least about 65%, or at least about 70%, or ranging from about 50% to about 90%, or ranging from about 55% to about 90%, or ranging from about 60% to about 90%, or ranging from about 65% to about 90%, or ranging from about 70% to about 90%. Elongation at break essentially measures the flexibility of the foam, which correlates with resistance to breakage or cracking when a stress is applied. Therefore, typically a higher elongation at break is beneficial for a battery potting material in an EV.

The tensile strength and elongation at break of the polyurethane-based elastomer foam are measured according to ISO 1798:2008, using specimen type 1A and a test speed of 12 mm/min. That is, the rate of travel of the power-actuated grip specified in the test standard has been modified to 12 mm/min.

In one embodiment, the polyurethane-based elastomer foam has a modulus (12mm/min, 0.1-2% strain) at 23°C of at least about 20 MPa, or at least about 25 MPa, or at least about 30 MPa, or at least about 32 MPa, or at least about 34 MPa, or at least about 36 MPa, or at least about 38 MPa, or at least about 40 MPa, or ranging from about 30 MPa to about 70 MPa, or ranging from about 35 MPa to 70 MPa, or ranging from about 40 MPa to about 70 MPa. The phrase "(12mm/min, 0.1-2% strain)" means that the modulus was measured at a 12 mm/min strain rate, between a 0.1-2% strain interval. The modulus is also referred to as the Young's modulus, and is a measure of elasticity. Typically, a higher modulus is beneficial for a battery potting material in an EV.

The modulus refers to the ratio of the stress difference to the corresponding strain difference at 0.1% strain and 2% strain. The stress is the ratio of the measured force over the initial cross-sectional of the tensile specimen. The strain is measured via an extensometer (clip-on or video extensometer) which records the length change during the test of gauge marks in the central constant-section part of the tensile specimen. The strain is the ratio of the measured length between the gauge marks over the initial length (at the start of the test) between those gauge marks.

In a preferred embodiment, the polyurethane-based elastomer foam has a tensile strength at 23°C of at least about 3 MPa, a % elongation at break at 23°C of at least about 50%, and a modulus (12mm/min, 0.1-2% strain) at 23°C of at least about 30 MPa. A polyurethane-based elastomer foam having this combination of tensile properties is an excellent battery potting material. This is because the foam has high strength, high strain capability and adequate rigidity, and therefore protects the battery cells it encapsulates from the harsh conditions experienced in e.g., an EV, where it experiences significant vibration, mechanical shock and temperature extremes. The inventors have surprisingly found that the above combination of tensile properties may be obtained by making a polyurethane-based elastomer foam using the reaction mixture described herein.

In one embodiment, the polyurethane-based elastomer foam has a:

Storage modulus (MPa) at -35°C / storage modulus (MPa) at 100°C

ranging from about 10 to about 150, or from about 20 to about 100, or from about 20 to about 75, or from about 30 to 60, or from about 40 to about 50. It is surprising that the polyurethane-based elastomer foam of the present disclosure has a storage modulus ratio at -35°C and 100°C in the range of about 10 to about 150, since this indicates a very stable level of mechanical properties (including tensile properties) over a large temperature range.

In one embodiment, the polyurethane-based elastomer foam has a tan delta below about 0.5, or below about 0.4, or below about 0.35, in the temperature range of -60°C to 200°C. The tan delta is the ratio of loss modulus to storage modulus. It is essentially a measure of the energy dissipation of the foam.

The storage modulus and tan delta of the foam are measured by dynamic mechanical analysis (DMA) using a TA Q800 DMA machine with a dual cantilever clamp. The sample dimensions are: length 80 mm, width approximately 10 mm and thickness approximately 5 mm. Measurement is with an amplitude at 5 $\mu$m and a frequency at 1 Hz. Samples are scanned during a temperature sweep from -60°C to 200°C at 3°C/min.

In one embodiment, the polyurethane-based elastomer foam has a density of at least about 200 kg/m$^3$, or at least about 300 kg/m$^3$, or at least about 350 kg/m$^3$, or at least about 380 kg/m$^3$, or at least about 400 kg/m$^3$, or in the range of about 200 kg/m$^3$ to about 1000 kg/m$^3$, or in the range of about 300 kg/m$^3$ to about 800 kg/m$^3$, or in the range of about 350 kg/m$^3$ to about 600 kg/m$^3$, or in the range of about 350 kg/m$^3$ to about 500 kg/m$^3$.

The reaction mixture disclosed herein is capable of forming polyurethane-based elastomer foams having the above-described tensile properties.

**[A method of potting a battery pack comprising a plurality of battery cells, and a potted battery pack]**

The present disclosure provides a method of potting a battery pack comprising a plurality of battery cells, the method comprising: mixing component A with component B as defined in the reaction system described herein to form a reactive mixture; placing the reactive mixture around the plurality of battery cells; and allowing the reactive mixture to cure to at least partially encapsulate the plurality of battery cells with a polyurethane-based elastomer foam.

A battery pack contains a plurality of battery cells, which may be configured in any number of ways. It is important for e.g., EVs to protect the plurality of battery cells in the battery pack by using a potting material. Here, the battery potting material is the polyurethane-based elastomer foam.

Any method known in the art may be used to place the reactive mixture around the plurality of battery cells in order to obtain the potted battery pack, and detailed discussion of the method herein is not necessary.

The polyurethane-based elastomer foam may completely, or substantially completely, encapsulate the plurality of battery cells.

The curing step may be aided by heating the reactive mixture, or by preheating a mould within the battery pack, to a temperature of e.g. about 30 to 50°C.

A potted battery pack is obtainable by the above-described method.

**[Use of the reaction system or polyurethane-based elastomer foam in battery potting]**

The present disclosure also provides a use of the reaction system as described herein or the polyurethane-based elastomer foam as described herein to at least partially encapsulate a plurality of battery cells within a battery pack with the polyurethane-based elastomer foam. The polyurethane-based elastomer foam may completely, or substantially completely, encapsulate the plurality of battery cells.

**[Examples]**

The present disclosure will be described in more detail with reference to the Example. The present disclosure is not limited to the following Example.

**Example 1**

Component A and component B as indicated in the below tables were formed:

| Component A | Weight% in component A |
|---|---|
| SUPRASEC®2021 | 80 |

(continued)

| Component A | Weight% in component A |
|---|---|
| SUPRASEC®5025 | 20 |

SUPRASEC®2021 is a hard block prepolymer, having an NCO% of 23.2 and average functionality of 2.0.

SUPRASEC®5025 is a polymeric MDI, having an NCO% of 31.0 and an average functionality of 2.7.

| Component B | Weight% in component B |
|---|---|
| DALTOCEL® F499 | 81.1 |
| MEG | 10.0 |
| DEG | 7.0 |
| TEGOSTAB® B 1048 | 0.2 |
| VORASURF® DC198 | 1.0 |
| JEFFCAT® ZF-54 | 0.2 |
| POLYCAT®SA 5 | 0.2 |
| Water | 0.3 |

DALTOCEL® F499 is a polyether polyol (based upon glycerol, EO and PO) having a hydroxyl number of 35 mg KOH/g, a molecular weight of approximately 5000 and functionality of 2.5.

TEGOSTAB® B 1048 and VORASURF® DC198 are silicone-based surfactants.

JEFFCAT® ZF-54 is a formic acid-blocked blow catalyst.

POLYCAT®SA 5 is a tertiary amine gel catalyst.

MEG and DEG are chain extenders.

Water is a blowing agent.

Components A and B were then mixed in a weight ratio of 1:1, and placed into a preheated mould (at 40°C) to obtain a polyurethane-based elastomer foam. The tensile properties of the obtained foam at 23°C were as follows:

| Tensile strength | 3.42 MPa |
|---|---|
| Elongation @ break | 74.6% |
| Modulus (12 mm/min, 0.1-2% strain) | 42.2 MPa |

Tensile strength and elongation at break were measured according to ISO 1798:2008 as described above. The modulus was measured as described above.

The storage modulus and tan delta of the obtained foam was measured by dynamic mechanical analysis (DMA) using a TA Q800 DMA machine, as described above. The results are shown in Figure 1.

The storage modulus (MPa) at -35°C / storage modulus (MPa) at 100°C was approximately 45.

The above results indicate that the obtained foam, and therefore the reaction system, is an excellent choice for a battery potting material, especially in an EV, due to the combination of high tensile strength, high elongation at break and high modulus. Moreover, the storage modulus does not vary much over a large temperature range, and the tan delta is below 0.35 over the temperature range -60°C to 200°C. The properties of the obtained foam are therefore excellent throughout a wide range of operating temperatures.

The present inventors have surprisingly found that the reaction system disclosed herein obtains polyurethane-based elastomer foams with an ideal balance of properties for use as a battery potting material, especially in EVs.

All ranges described herein are exemplary in nature and include any and all values in between. The terms "substantially", "approximately" and "about" used herein are interchangeable and refer to a measurement that includes the stated measurement and any measurements reasonably close to the stated measurement. Measurements that are reasonably close to the stated measurement deviate from the stated measurement by a reasonably small amount as understood and readily ascertained by individuals having ordinary skill in the relevant art. Such deviations may be attributable to measurement error, differences in measurement and/or manufacturing equipment calibrations, human error in reading and/or setting measurements, minor adjustments made to optimize performance and/or structural parameters in view of differences in measurement associated with other components, particular implementation scenarios, imprecise adjustment and/or manipulation of objects by a person or machine. In the event it is determined that individuals having ordinary skill in the relevant art would not readily ascertain values for such reasonably small differences, the terms "about" and "approximately" can be understood to mean plus or minus 10% of the stated value.

Throughout the description and claims, the terms take the meanings explicitly defined herein, unless the context clearly dictates otherwise.

The phrases "in one embodiment", "in an embodiment" and "in some embodiments" etc. as used herein do not necessarily refer to the same embodiment(s), though they may. Furthermore, the phrases "in another embodiment" and "in some other embodiments" as used herein do not necessarily refer to a different embodiment, though they may. All embodiments of the present disclosure are intended to be combinable.

The terms "comprises" and "comprising" mean to include but not limited to, such that further features may be present. The terms may also mean to consist of or consist essentially of.

All references and test methods cited herein are incorporated by reference in their entireties.

EMBODIMENTS

1. A reaction system for producing a polyurethane-based elastomer foam, the reaction system comprising:

component A) an isocyanate component comprising a hard block prepolymer; and
component B) an isocyanate-reactive component comprising:

i) a polyol;
ii) a first chain extender and a second chain extender which is different from the first chain extender, wherein the first and second chain extenders are each an aliphatic diol having from 2 to 6 carbon atoms;
iii) a blowing agent;
iv) optionally a surfactant; and
v) optionally a catalyst.

2. A reaction system according to embodiment 1, wherein the hard block prepolymer is formed from the reaction between an isocyanate composition and one or more isocyanate-reactive compounds each having a molar mass below 500 g/mol, preferably wherein the hard block prepolymer is an MDI-based prepolymer.

3. A reaction system according to embodiment 1 or embodiment 2, wherein the NCO% of the hard block prepolymer ranges from about 15% to about 30%, and/or wherein the average functionality of the hard block prepolymer ranges from about 1.7 to about 2.3.

4. A reaction system according to any preceding embodiment, wherein the isocyanate component further comprises a polyisocyanate compound which is different from the hard block prepolymer, preferably wherein the polyisocyanate compound is polymeric MDI.

5. A reaction system according to embodiment 4, wherein the NCO% of the polyisocyanate compound ranges from about 25% to about 40%, and/or wherein the average functionality of the polyisocyanate compound ranges from about 2.4 to about 3.0.

6. A reaction system according to embodiment 4 or embodiment 5, wherein the weight ratio of the hard block prepolymer to the polyisocyanate compound in the isocyanate component ranges from 70:30 to 90:10.

7. A reaction system according to any preceding embodiment, wherein the polyol is a polyether polyol.

8. A reaction system according to any preceding embodiment, wherein the polyol has a hydroxyl number ranging from about 10 mg KOH/g to about 180 mg KOH/g, and/or wherein the polyol has a weight-average molecular weight ranging from about 1000 g/mol to about 7500 g/mol, and/or wherein the polyol has an average functionality ranging from about 2.0 to about 3.0.

9. A reaction system according to any preceding embodiment, wherein the first and second chain extenders are each linear aliphatic diols, and preferably any one independently selected from monoethylene glycol (MEG), diethylene glycol (DEG), 1,3-propanediol, 1,2-propanediol, 2-methyl-1,3-propanediol, 3-chloro-1,2-propanediol, 1,4-butanediol, 1,3-butanediol, 2,3-butanediol, 2-ethyl-1,4-butanediol, 1,5-pentanediol, 1,3-pentanediol, 3-methyl-1,5-pentanediol, 2-methyl-2,4-pentanediol, 1,6-hexanediol, 1,2-hexanediol and dipropylene glycol.

10. A reaction system according to any preceding embodiment, wherein the first and second chain extenders each has a molar mass ranging from about 60 to about 110 g/mol, wherein the molar mass of the first chain extender is less than the molar mass of the second chain extender.

11. A reaction system according to any preceding embodiment, wherein the first chain extender is monoethylene glycol (MEG), and/or wherein the second chain extender is diethylene glycol (DEG).

12. A reaction system according to any preceding embodiment, wherein the polyol is present in component B in an amount ranging from about 65 weight% to about 90 weight%, based upon the total weight of component B, and/or wherein the first chain extender is present in component B in an amount ranging from about 5 weight% to about 15 weight%, based upon the total weight of component B, and/or wherein the second chain extender is present in component B in an amount ranging from about 4 weight% to about 10 weight%, based upon the total weight of component B.

13. A reaction system according to any preceding embodiment, wherein component A and component B are present in the reaction system in an amount such that the isocyanate index is between about 75 and about 150 when component A is mixed with component B.

14. A reaction system according to any preceding embodiment, wherein the polyurethane-based elastomer foam has a tensile strength at 23°C of at least about 3.0 MPa, and/or wherein the polyurethane-based elastomer foam has a % elongation at break at 23°C of at least about 50%, and/or wherein the polyurethane-based elastomer foam has a modulus (12mm/min, 0.1-2% strain) at 23°C of at least about 30 MPa.

15. A reaction system according to any preceding embodiment, wherein the polyurethane-based elastomer foam has a storage modulus (MPa) at -35°C / storage modulus (MPa) at 100°C ranging from about 10 to about 150, and/or wherein the polyurethane-based elastomer foam has a tan delta below about 0.5 in the temperature range of -60°C to 200°C.

16. A method of producing a polyurethane-based elastomer foam, the method comprising:

i) mixing component A with component B as defined in the reaction system according to any of embodiments 1-15 to form a reactive mixture; and
ii) allowing the reactive mixture to cure to form a polyurethane-based elastomer foam.

17. A polyurethane-based elastomer foam obtainable by the method as defined in embodiment 16.

18. A method of potting a battery pack comprising a plurality of battery cells, the method comprising:

i) mixing component A with component B as defined in the reaction system according to any of embodiments 1-15 to form a reactive mixture;
ii) placing the reactive mixture around the plurality of battery cells; and
iii) allowing the reactive mixture to cure to at least partially encapsulate the plurality of battery cells with a polyurethane-based elastomer foam.

19. A potted battery pack obtainable by the method as defined in embodiment 18.

20. Use of the reaction system as defined in any of embodiments 1-15 or the polyurethane-based elastomer foam as defined in embodiment 17 to at least partially encapsulate a plurality of battery cells within a battery pack with the polyurethane-based elastomer foam.

**Claims**

1. A reaction system for producing a polyurethane-based elastomer foam, the reaction system comprising:

   component A) an isocyanate component comprising a hard block prepolymer; and
   component B) an isocyanate-reactive component comprising:

   i) a polyol;
   ii) a first chain extender and a second chain extender which is different from the first chain extender, wherein the first and second chain extenders are each an aliphatic diol having from 2 to 6 carbon atoms;
   iii) a blowing agent;
   iv) optionally a surfactant; and
   v) optionally a catalyst.

2. A reaction system according to Claim 1, wherein the hard block prepolymer is formed from the reaction between an isocyanate composition and one or more isocyanate-reactive compounds each having a molar mass below 500 g/mol, preferably wherein the hard block prepolymer is an MDI-based prepolymer.

3. A reaction system according to Claim 1 or Claim 2, wherein the NCO% of the hard block prepolymer ranges from about 15% to about 30%, and/or wherein the average functionality of the hard block prepolymer ranges from about 1.7 to about 2.3.

4. A reaction system according to any preceding claim, wherein the isocyanate component further comprises a polyisocyanate compound which is different from the hard block prepolymer, preferably wherein the polyisocyanate compound is polymeric MDI, and preferably wherein
the NCO% of the polyisocyanate compound ranges from about 25% to about 40% and/or wherein the average functionality of the polyisocyanate compound ranges from about 2.4 to about 3.0.

5. A reaction system according to Claim 4, wherein the weight ratio of the hard block prepolymer to the polyisocyanate compound in the isocyanate component ranges from 70:30 to 90:10.

6. A reaction system according to any preceding claim, wherein the polyol is a polyether polyol, and/or
wherein the polyol has a hydroxyl number ranging from about 10 mg KOH/g to about 180 mg KOH/g, and/or wherein the polyol has a weight-average molecular weight ranging from about 1000 g/mol to about 7500 g/mol, and/or wherein the polyol has an average functionality ranging from about 2.0 to about 3.0.

7. A reaction system according to any preceding claim, wherein the first and second chain extenders are each linear aliphatic diols, and preferably any one independently selected from monoethylene glycol (MEG), diethylene glycol (DEG), 1,3-propanediol, 1,2-propanediol, 2-methyl-1,3-propanediol, 3-chloro-1,2-propanediol, 1,4-butanediol, 1,3-butanediol, 2,3-butanediol, 2-ethyl-1,4-butanediol, 1,5-pentanediol, 1,3-pentanediol, 3-methyl-1,5-pentanediol, 2-methyl-2,4-pentanediol, 1,6-hexanediol, 1,2-hexanediol and dipropylene glycol.

8. A reaction system according to any preceding claim, wherein the first and second chain extenders each has a molar mass ranging from about 60 to about 110 g/mol, wherein the molar mass of the first chain extender is less than the molar mass of the second chain extender.

9. A reaction system according to any preceding claim, wherein the first chain extender is monoethylene glycol (MEG), and/or wherein the second chain extender is diethylene glycol (DEG).

10. A reaction system according to any preceding claim, wherein the polyol is present in component B in an amount ranging from about 65 weight% to about 90 weight%, based upon the total weight of component B, and/or wherein the first chain extender is present in component B in an amount ranging from about 5 weight% to about 15 weight%, based upon the total weight of component B, and/or wherein the second chain extender is present in component B in an amount ranging from about 4 weight% to about 10 weight%, based upon the total weight of component B.

11. A reaction system according to any preceding claim, wherein the polyurethane-based elastomer foam has a tensile strength at 23°C of at least about 3.0 MPa, and/or wherein the polyurethane-based elastomer foam has a % elongation at break at 23°C of at least about 50%, and/or wherein the polyurethane-based elastomer foam has a modulus (12mm/min, 0.1-2% strain) at 23°C of at least about 30 MPa, and/or

> wherein the polyurethane-based elastomer foam has a
> storage modulus (MPa) at -35°C / storage modulus (MPa) at 100°C
> ranging from about 10 to about 150, and/or
> wherein the polyurethane-based elastomer foam has a tan delta below about 0.5 in the temperature range of
> -60°C to 200°C.

12. A method of producing a polyurethane-based elastomer foam, the method comprising:

> i) mixing component A with component B as defined in the reaction system according to any of Claims 1-11 to form a reactive mixture; and
> ii) allowing the reactive mixture to cure to form a polyurethane-based elastomer foam.

13. A polyurethane-based elastomer foam obtainable by the method as defined in Claim 12.

14. A method of potting a battery pack comprising a plurality of battery cells, the method comprising:

> i) mixing component A with component B as defined in the reaction system according to any of Claims 1-11 to form a reactive mixture;
> ii) placing the reactive mixture around the plurality of battery cells; and
> iii) allowing the reactive mixture to cure to at least partially encapsulate the plurality of battery cells with a polyurethane-based elastomer foam.

15. A potted battery pack obtainable by the method as defined in Claim 14.

Fig. 1: